# FASCICULE DE BREVET EUROPEEN

(11) **EP 4 136 025 B1**
(45) Date de publication et mention de la délivrance du brevet: **04.12.2024**
(21) Numéro de dépôt: 21718859.8
(22) Date de dépôt: 14.04.2021
(51) Int. Cl.: B64C 1/08, B64U 20/30

(54) **CHASSIS DE DRONE**
DRONE FAHRWERK
DRONE FRAME

(30) Priorité: 17.04.2020 FR 2003869
(43) Date de publication de la demande: 22.02.2023
(73) Titulaire: Bee Tech, 44000 Nantes (FR); Nantes Université, 44000 Nantes (FR)
(72) Inventeur: CASARI, Pascal, 44600 SAINT-NAZAIRE (FR); BERTHIAU, Thibault, 44360 VIGNEUX DE BRETAGNE (FR); TRICHEREAU, Antoine, 44000 NANTES (FR)
(74) Mandataire: Cabinet Le Guen Maillet
(86) Numéro de dépôt international: PCT/EP2021/059620
(87) Numéro de publication internationale: WO 2021/209483

(56) Documents cités:
- EP-A1- 1 064 172
- EP-B1- 1 064 172
- WO-A1-2014/198774
- WO-A1-2018/156991
- US-A1- 2016 375 983
- US-A1- 2017 329 034

## Description

### DOMAINE TECHNIQUE

La présente invention concerne le domaine des drones et plus particulièrement le domaine des châssis de drone destinés à protéger le drone et son environnement en cas d'impact et à assurer une stabilité d'éléments fonctionnels associés au drone.

### ETAT DE LA TECHNIQUE ANTERIEURE

Les drones sont utilisés pour des applications de plus en plus nombreuses et sont donc amenés à rencontrer des obstacles variés. Par conséquent, un drone peut être soumis à des impacts d'intensité variable en fonction des situations de vol et des obstacles potentiels présents dans l'environnement du drone. De tels impacts ont pour conséquences d'endommager le drone, que ce soit au niveau structurel par détérioration du châssis, ou au niveau fonctionnel par dégradation d'éléments fonctionnels tels qu'une carte de vol, une batterie ou des moteurs. Des impacts entre le drone et des obstacles extérieurs peuvent en outre causer des dommages humains et matériels dans l'environnement du drone.

Certains drones présentent une structure rigide qui permet de résister à des vitesses d'impact élevées en absorbant une grande quantité d'énergie par déformation plastique. Toutefois, de tels drones ne permettent pas de limiter les dommages causés à leur environnement. D'autres drones ayant une structure moins rigide résistent à des vitesses d'impacts faibles par absorption élastique d'énergie. En revanche, de telles structures peuvent manquer de stabilité.

Le document WO 2018/156991 A1 décrit un véhicule aérien sans pilote comprenant un ou plusieurs réseaux de capteurs.

Le document US 2016/375983 A1 décrit un drone comportant un châssis et pouvant avoir une forme sphérique.

Il est alors souhaitable de pallier ces inconvénients de l'état de la technique.

Il est notamment souhaitable de fournir une solution qui permette de protéger le drone et son environnement lors d'impacts à différentes vitesses et donc pour des forces d'impacts variables. Il est en outre souhaitable de fournir une solution qui soit légère. Il est de plus souhaitable de fournir une solution qui permette un maintien stable des éléments fonctionnels d'un drone dans des situations de vol habituelles et garantisse ainsi un fonctionnement optimal du drone.

### EXPOSE DE L'INVENTION

Un objet de la présente invention est de proposer un châssis de drone comportant une structure externe qui se déforme élastiquement en flexion, et comportant en outre un ensemble de câbles reliant au moins un support, destiné à supporter un élément fonctionnel du drone, à la structure externe. L'ensemble de câbles comporte des câbles élastiques qui se déforment élastiquement en traction sous une contrainte de traction supérieure à un seuil, dit seuil naturel de déformation en traction. L'ensemble de câbles est fixé à plusieurs points de la structure externe, dits points d'attache, pour maintenir le au moins un support dans une position stable par rapport à la structure externe. Les câbles élastiques sont fixés sous contrainte par application, auxdits câbles élastiques, d'une contrainte de traction initiale, et par maintien de la contrainte de traction initiale par fixation à la structure externe de sorte qu'une force extérieure appliquée au châssis et générant une contrainte de traction supplémentaire sur les câbles élastiques fixés sous contrainte entraîne une déformation en traction des câbles et une déformation en flexion de la structure externe seulement si ladite contrainte de traction supplémentaire dépasse un seuil minimal de déformation en traction qui est supérieur au seuil naturel de déformation en traction des câbles élastiques.

Ainsi, le châssis de drone résiste à des vitesses d'impacts faibles sans déformation de la structure externe tout en restant léger. Des éléments fonctionnels du drone peuvent être maintenus dans une position stable lors de collisions à vitesses d'impacts faibles correspondant à des situations de vol habituelles. En outre, le châssis de drone résiste à des vitesses d'impacts plus élevées par conversion d'énergie cinétique en énergie élastique ou par plastification au niveau des câbles, ce qui permet de protéger à la fois le drone et son environnement par diminution de l'amplitude des forces d'impact.

Selon un mode de réalisation particulier, l'ensemble de câbles comporte des câbles élastiques en polyéthylène haute densité.

Selon un mode de réalisation particulier, une section de chaque câble élastique de l'ensemble de câbles est déterminée pour réduire une limite d'élasticité des câbles élastiques et favoriser une déformation plastique desdits câbles lorsqu'une contrainte de traction supplémentaire appliquée aux câbles élastiques fixés sous contrainte, et générée par la force extérieure appliquée au châssis, est supérieure au seuil minimal de déformation en traction desdits câbles élastiques fixés sous contrainte.

Ainsi, l'absorption par plastification de l'énergie cinétique reçue par le châssis de drone lors d'un impact est favorisée par rapport à une conversion en énergie élastique, limitant ainsi une transmission de l'énergie cinétique au support et permettant ainsi de protéger les éléments fonctionnels du drone. Selon un mode de réalisation particulier, la structure externe du châssis de drone comporte deux arceaux, un premier arceau étant situé dans un plan orthogonal à un deuxième arceau, le premier arceau étant dans un plan vertical et le deuxième arceau étant dans un plan horizontal lorsque le drone est dans une position de vol stabilisée. Les points d'attache auxquels est fixé le au moins un support sont situés sur un même arceau. Ainsi, une contrainte de traction initiale peut aisément être appliquée et maintenue sur les câbles élastiques auxquels sont rattachés le support.

Selon un mode de réalisation particulier, l'ensemble de câbles comporte des câbles orientés dans plusieurs directions.

Ainsi, le châssis de drone peut résister à des forces extérieures appliquées à la structure externe dans différentes directions et donc à des impacts avec des obstacles provenant de différentes directions.

Selon un mode de réalisation particulier, un support comporte une carte de vol, et chaque câble de l'ensemble de câbles a une longueur déterminée pour maintenir le support comportant la carte de vol au centre de la structure externe.

Ainsi, la carte de vol est maintenue dans une position favorisant un guidage optimal du drone.

Selon un mode de réalisation particulier, chaque câble de l'ensemble de câbles a une longueur déterminée pour centrer, par rapport à la structure externe, un centre de gravité d'un ensemble des éléments fonctionnels supportés par le au moins un support.

Ainsi, l'équilibre du châssis de drone est favorisé, ce qui permet une meilleure maîtrise des déplacements et donc du guidage du drone.

Selon un mode de réalisation particulier, l'ensemble de câbles relie plusieurs supports à la structure externe, chaque support étant relié à la structure externe par un sous-ensemble de l'ensemble de câbles indépendamment d'un autre support.

Ainsi, il est possible de limiter la transmission d'un mouvement d'un élément fonctionnel, généré par une conversion en énergie élastique au niveau d'un sous-ensemble de câbles, à un autre élément fonctionnel.

Selon un mode de réalisation particulier, l'ensemble de câbles comporte un sous-ensemble de câbles reliant le au moins un support à deux points d'attache de la structure externe, le sous-ensemble de câbles comportant deux paires de câbles, chaque paire de câbles reliant un des deux points d'attache au support, et le sous-ensemble de câbles étant agencé de sorte que, pour chaque paire de câbles, un premier câble de la paire de câbles relie un point d'attache à un premier point du support et un deuxième câble de ladite paire de câbles relie le même point d'attache à un deuxième point du support différent du premier point du support.

Ainsi, une contrainte de traction initiale peut aisément être appliquée et maintenue sur les câbles élastiques auxquels sont rattachés le support.

Selon un mode de réalisation particulier, l'ensemble de câbles comporte un sous-ensemble de câbles qui relie, entre deux points d'attache, plusieurs supports alignés entre eux et alignés avec lesdits deux points d'attache.

Ainsi, il est aisé d'ajuster la contrainte de traction initiale à chaque câble du sous-ensemble de câbles lors de la fixation du sous-ensemble de câbles au deuxième point d'attache.

Selon un mode de réalisation particulier, l'ensemble de câbles relie le au moins un support à six points d'attache du deuxième arceau par six câbles distincts, les six câbles distincts comportant trois câbles supérieurs reliant le support à respectivement trois premiers points d'attache, les premiers points d'attache étant situés en partie haute du deuxième arceau et répartis sur la circonférence de l'arceau, et trois câbles inférieurs reliant le support à respectivement trois seconds points d'attache, chaque second point d'attache étant situé sur le deuxième arceau au-dessous d'un premier point d'attache.

Selon un mode de réalisation particulier, le châssis de drone supporte au moins quatre ensembles moteur comportant chacun un moteur et une hélice, chaque ensemble moteur étant fixé à la structure externe par une tige rigide, et dans lequel l'ensemble de câbles comporte un câble reliant chaque ensemble moteur à chaque autre ensemble moteur. Ainsi, la structure externe est rigidifiée grâce aux câbles reliant les ensembles moteurs, ce qui permet d'éviter une déformation lors d'impacts à vitesses faibles, mais conserve une déformabilité lors d'impacts à vitesses élevées permettant de diminuer la force d'impact à la fois sur le drone et sur son environnement.

Selon un mode de réalisation particulier, des fils électriques sont passés à l'intérieur de câbles de l'ensemble de câbles pour relier électriquement entre eux des éléments fonctionnels.

Ainsi, les éléments fonctionnels peuvent être reliés électriquement entre eux grâce à un acheminement de fils électriques au plus court, permettant ainsi de limiter un ajout de masse au châssis de drone.

L'invention concerne également un drone comportant un châssis de drone mentionné ci-dessus dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un drone selon un mode de réalisation particulier ;
[Fig. 2A] illustre schématiquement une partie d'un châssis de drone avec un ensemble de câbles lorsque les câbles ne sont pas totalement fixés à une structure externe.
[Fig. 2B] illustre schématiquement une partie du châssis de drone avec un ensemble de câbles lorsque les câbles sont totalement fixés à la structure externe.
[Fig. 3] illustre schématiquement une vue en coupe, selon un premier plan de coupe, d'une partie du châssis de drone, le châssis comportant un ensemble de câbles permettant de maintenir un support selon un premier mode de réalisation ;
[Fig. 4] illustre schématiquement une vue en coupe, selon un deuxième plan de coupe, d'une partie du châssis de drone, le châssis comportant un ensemble de câbles permettant de maintenir plusieurs supports selon un deuxième mode de réalisation ;
[Fig. 5] illustre schématiquement une vue en coupe, selon le premier plan de coupe, d'une partie du châssis de drone, le châssis comportant un ensemble de câbles permettant de maintenir plusieurs supports selon un troisième mode de réalisation ;
[Fig. 6] illustre schématiquement une vue en coupe, selon le premier plan de coupe, d'une partie du châssis de drone, le châssis comportant un ensemble de câbles permettant de maintenir plusieurs supports selon un quatrième mode de réalisation ;
[Fig. 7] illustre schématiquement en vue de dessus une partie du châssis de drone, avec l'ensemble de câbles du châssis de drone reliant quatre moteurs reliés chacun à une hélice ;
[Fig. 8] illustre schématiquement en perspective une partie du châssis de drone avec un ensemble de câbles permettant de maintenir un support selon un cinquième mode de réalisation.

### EXPOSE DETAILLE DE MODES DE REALISATION

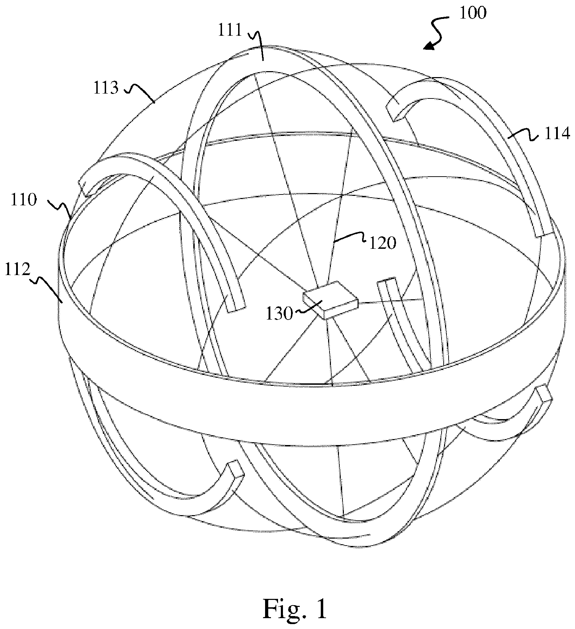

La **Fig. 1** illustre ainsi schématiquement un drone 100 selon un mode de réalisation particulier. Le drone 100 comporte un châssis comportant une structure externe 110.

La structure externe 110 a par exemple la forme d'une cage. Dans le mode de réalisation représenté en Fig. 1, la structure externe 110 comporte un premier arceau 111 et un deuxième arceau 112, des croissants de protection 114 et des fils 113 permettant de relier les arceaux 111, 112 et les croissants de protection 114 entre eux. Le premier arceau 111 est situé dans un plan orthogonal au deuxième arceau 112. Lorsque le drone 100 est dans une position de vol stabilisée telle que représentée en Fig. 1, le premier arceau 111 est dans un plan vertical et le deuxième arceau 112 est dans un plan horizontal.

La structure externe 110 est élastique en flexion. Autrement dit, la structure externe 110 se déforme de manière réversible lorsqu'elle est soumise à une contrainte de flexion qui dépasse un premier seuil prédéfini, appelé seuil minimal de déformation en flexion de la structure externe 110, et retrouve sa forme de repos lorsque la contrainte de flexion repasse en-dessous dudit seuil minimal de déformation en flexion de la structure externe 110. Lorsque la structure externe 110 est soumise à une contrainte de flexion qui dépasse un deuxième seuil prédéfini appelé limite d'élasticité en flexion de la structure externe 110, ladite structure externe 110 se déforme plastiquement, autrement dit de manière irréversible, et ne retrouve pas sa forme de repos lorsque la contrainte de flexion repasse en-dessous du seuil minimal de déformation en flexion de la structure externe 110. L'élasticité en flexion de la structure externe 110 génère, en cas d'impact, des déformations élastiques en flexion et donc réversibles. En outre, les déformations élastiques en flexion de la structure externe 110 générées par un impact permettent d'allonger une durée de contact entre la structure externe 110 et un obstacle. Une force d'impact est ainsi répartie sur une durée de contact plus longue, ce qui entraîne une diminution de l'amplitude de la force d'impact. Les déformations élastiques en flexion de la structure externe 110 entraînent par ailleurs une augmentation d'une surface de contact entre ladite structure externe 110 et l'obstacle rencontré. L'énergie transmise lors de l'impact est alors répartie sur une plus grande surface entraînant une diminution locale d'un pic de force et donc une diminution d'une contrainte appliquée par la force d'impact, tant du côté du drone que du côté d'un obstacle.

La capacité à se déformer élastiquement en flexion de la structure externe 110 permet ainsi, en favorisant des déformations réversibles et en réduisant des contraintes de flexion appliquées à la structure externe 110, de limiter un endommagement de la structure externe 110 d'une part et de limiter des dommages pouvant être causés à des obstacles de l'environnement du drone tels que des objets ou des personnes d'autre part.

La structure externe 110 comporte des éléments réalisés avec des matériaux composites plus légers, ayant une limite d'élasticité en flexion plus élevée et permettant ainsi de réaliser des pièces de plus faible épaisseur que des matériaux métalliques par exemple. La structure externe 110 a ainsi une masse limitée. L'obtention de pièces d'épaisseur plus faible, comportant ainsi moins de matière, permet en outre d'augmenter la déformabilité en flexion de la structure externe 110.

Un élément de la structure externe 110 tel qu'un arceau 111, 112, un croissant de protection 114 ou un fil 113 est avantageusement courbe afin d'éviter des zones susceptibles de concentrer des contraintes. En outre, des formes courbes permettent de limiter la masse de la structure externe 110 et la quantité de matériau utilisée. Ainsi, la structure externe 110 peut avoir par exemple une forme ellipsoïdale ou une forme de trèfle.

Le châssis de drone 100 comporte en outre un ensemble de câbles 120 permettant de maintenir un ou plusieurs éléments fonctionnels à l'intérieur de la structure externe 110. Un élément fonctionnel est par exemple une carte de vol, une batterie, un ou plusieurs moteurs avec hélice, une caméra ou un effecteur tel qu'un capteur destiné à effectuer des mesures, un produit à déposer, un colis à transporter ou une pince dédiée à des prélèvements. L'ensemble de câbles 120 relie au moins un support 130 destiné à supporter un élément fonctionnel à la structure externe 110. Un support 130 est par exemple un boîtier ou une plaque de fixation. Un câble 120 peut alternativement être une barre souple, un fil, un lien textile ou un cordage. L'ensemble de câbles 120 est agencé pour maintenir le support 130 dans une position stable par rapport à la structure externe 110, quelle que soit l'orientation du châssis de drone 100 et tant que la structure externe 110 reste dans une configuration géométrique initiale. L'ensemble de câbles 120 est rattaché à plusieurs points de la structure externe 110, dits points d'attache 116. Les câbles 120 sont fixés aux points d'attache par des liaisons de cordages tels que noeuds, épissures, inserts ou cosses.

Au moins une partie des câbles 120 de l'ensemble de câbles 120 est élastique en traction. Un câble 120 élastique se déforme de manière réversible en s'allongeant lorsqu'il est soumis à une contrainte de traction qui dépasse un troisième seuil prédéfini appelé seuil naturel de déformation en traction du câble 120 élastique et retrouve sa forme de repos lorsque la contrainte de traction repasse en-dessous du seuil naturel de déformation du câble 120 élastique. Lorsque le câble 120 élastique est soumis à une contrainte de traction qui dépasse un quatrième seuil prédéfini appelé limite d'élasticité en traction dudit câble 120 élastique, le câble 120 élastique se déforme plastiquement et ne retrouve pas sa forme de repos lorsque la contrainte de flexion repasse en-dessous du seuil naturel de déformation en traction du câble 120 élastique. Un câble 120 élastique est par exemple un cordage en polyéthylène haute densité. Selon d'autres exemples, un câble 120 élastique est un cordage en poly(p-phénylène-2,6-benzobisoxazole) ou PBO, en carbone, en polyester, en polyamide, en latex ou en polyuréthane.

Les câbles 120 élastiques de l'ensemble de câbles 120 sont en outre fixés sous contrainte à la structure externe 110. Une contrainte de traction, dite initiale, est appliquée auxdits câbles 120 élastiques et maintenue par fixation à la structure externe 110. Autrement dit, un câble 120 élastique ou un sous-ensemble de câbles 120 élastiques est fixé sous tension entre au moins deux points d'attache 116 de la structure externe 110 de sorte que ledit câble 120 ou ensemble de câbles 120 élastique reste étiré élastiquement tant que la structure externe 110 reste dans sa configuration géométrique initiale. La configuration géométrique initiale de la structure externe 110 correspond à une configuration géométrique dans laquelle l'ensemble de câbles 120 est totalement fixé à la structure externe 110, les câbles 120 élastiques étant contraints en traction, et pour laquelle aucune force extérieure n'est appliquée au châssis de drone 100. La configuration géométrique initiale de la structure externe 110 est donc par exemple obtenue en situation de vol stable. Les câbles 120 élastiques fixés sous contrainte de l'ensemble de câbles 120 permettent, dans des situations de vol identifiées, de maintenir le support 130 dans une position stable par rapport à la structure externe 110.

Des fils électriques peuvent en outre être passés à l'intérieur des câbles 120 pour relier électriquement différents éléments fonctionnels entre eux et au plus court. Par exemple, les moteurs peuvent être reliés électriquement à la carte de vol et à la batterie tout en limitant la masse du drone 100.

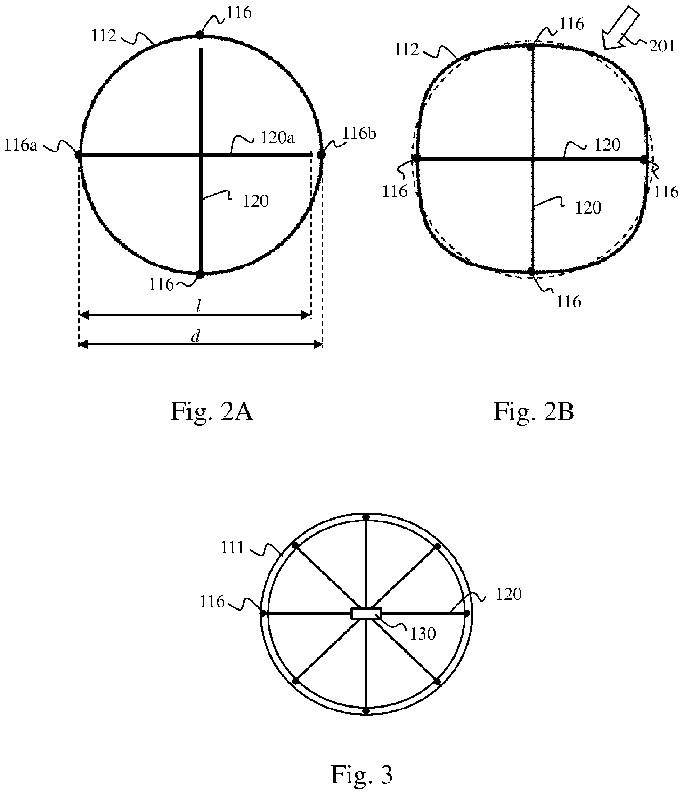

La **Fig. 2A** illustre schématiquement une partie du châssis de drone 100 avec un ensemble de câbles 120 lorsque les câbles 120 ne sont pas totalement fixés à une structure externe 110. La partie du châssis de drone 100 ainsi représentée comporte le deuxième arceau 112 de la structure externe 110 et deux câbles 120 élastiques de l'ensemble de câbles 120 dans une configuration où lesdits câbles 120 élastiques sont partiellement fixés à la structure externe 110. Dans ladite configuration, la structure externe 110 est soumise à une contrainte nulle et est donc dans sa forme de repos, différente d'une forme géométrique que prend la structure externe 110 du châssis de drone 100 lorsque le drone 100 est dans une situation de vol stabilisée.

Afin d'appliquer une contrainte de traction initiale à chaque câble 120 élastique, une longueur *l* d'un câble 120 est inférieure à une distance *d* entre deux points d'attache 116 que le câble 120 est supposé relier. La longueur *l* d'un câble 120 est définie sous déformation nulle, autrement dit lorsque le câble 120 est au repos ou n'est pas étiré élastiquement, et entre deux extrémités supposées relier lesdits deux points d'attache 116. La distance *d* entre lesdits deux points d'attache 116 est une distance minimale définie sous contrainte nulle, lorsque la structure extérieure 110 est dans sa forme de repos et n'est pas rattachée à l'ensemble de câbles 120.

Par exemple, le câble 120a a une longueur sous déformation nulle *l* qui est inférieure à la distance *d* sous contrainte nulle entre deux points d'attache 116a et 116b que ledit câble 120a est supposé relier après fixation.

La **Fig. 2B** illustre schématiquement une partie du châssis de drone 100 avec un ensemble de câbles 120 lorsque les câbles 120 sont totalement fixés à la structure externe. La partie du châssis de drone 100 ainsi représentée comporte le deuxième arceau 112 de la structure externe 110 et deux câbles 120 élastiques de l'ensemble de câbles 120 dans une configuration où lesdits câbles 120 sont totalement fixés à la structure externe 110. La structure externe 110 est alors dans sa configuration géométrique initiale, qui correspond à la forme géométrique que prend la structure externe 110 du châssis de drone 100 lorsque le drone 100 est dans une situation de vol stabilisée et qui diffère légèrement de la forme de repos de la structure externe 110.

Lorsque le câble 120 élastique de longueur *l* sous déformation nulle est fixé à la structure externe 110, entre deux points d'attache séparés de la distance *d* sous contrainte nulle, supérieure à ladite longueur *l*, un premier effet est d'appliquer une contrainte de traction initiale au câble 120 élastique qui entraîne un étirement élastique dudit câble 120 élastique. Le câble 120 élastique est ainsi fixé sous contrainte et maintenu étiré élastiquement dans la configuration géométrique initiale de la structure externe 110. Un deuxième effet est de déformer élastiquement en flexion au moins une partie de la structure externe 110, comme par exemple le deuxième arceau 112, et de donner à la structure externe 110 sa configuration géométrique initiale.

Lors de l'utilisation du drone 100, le châssis peut être soumis à une force extérieure qui s'applique sur la structure externe 110. Si la force extérieure est orientée dans une direction transverse à celle d'un câble 120 comme par exemple une force extérieure dans une direction 201, le câble 120 en question est sollicité en traction et donc soumis à une contrainte de traction supplémentaire. En raison de la contrainte de traction initiale appliquée, un câble 120 élastique fixé sous contrainte présente alors un comportement modifié par rapport à un câble 120 élastique similaire mais non fixé sous contrainte de traction initiale et soumis à une contrainte de traction identique à ladite contrainte de traction supplémentaire. D'une part, l'allongement du câble 120 élastique fixé sous contrainte généré par la contrainte de traction supplémentaire est limité et donc inférieur en amplitude. D'autre part, le câble 120 élastique fixé sous contrainte de traction initiale commence à se déformer lorsque la contrainte de traction supplémentaire à laquelle il est soumis est supérieure à un seuil minimal de déformation en traction, ledit seuil minimal de déformation en traction étant supérieur au seuil naturel de déformation en traction du câble 120 élastique.

La contrainte initiale de traction des câbles 120 élastiques permet ainsi de limiter la déformation élastique en flexion de la structure externe 110 et de limiter le mouvement du support 130. En d'autres termes, la contrainte de traction initiale des câbles 120 permet d'augmenter la raideur de la structure externe 110.

En outre, tant que la contrainte de traction supplémentaire appliquée à un câble 120 élastique fixé sous contrainte est inférieure au seuil minimal de déformation en traction, ledit câble 120 élastique conserve une longueur initiale. Il est alors possible de maintenir le support 130 dans une position stable par rapport à la structure externe 110, ce qui garantit un fonctionnement optimal des éléments fonctionnels supportés par le support 130. De plus, la configuration géométrique initiale de la structure externe 110 peut être conservée lorsque le châssis est soumis à une force extérieure inférieure à un cinquième seuil prédéfini. Le cinquième seuil prédéfini dépend des premier et deuxième seuils prédéfinis de contrainte en flexion de la structure externe 110, de l'orientation de la force extérieure par rapport à l'orientation des câbles 120 élastiques fixés sous contrainte de l'ensemble de câbles 120, et augmente avec la contrainte initiale de traction appliquée aux câbles 120 élastiques fixés sous contrainte.

La contrainte de traction initiale appliquée à un câble 120 élastique de l'ensemble de câbles 120 peut être ajustée en modifiant des paramètres du câble 120 tels que la longueur *l* sous déformation nulle du câble 120, la section sous déformation nulle du câble 120 et/ou la limite d'élasticité du câble 120. Il est ainsi possible d'adapter le seuil minimal de déformation en traction des câbles 120 en tenant compte de forces extérieures potentielles pouvant s'appliquer à la structure externe 110 dans des situations de vol identifiées comme habituelles, telles que par exemple lors d'un atterrissage ou d'un décollage. En outre, des paramètres géométriques du châssis de drone 100 peuvent être ajustés en tenant compte des directions des forces extérieures potentielles. Dans un mode de réalisation particulier, les câbles 120 élastiques fixés sous contrainte sont orientés dans plusieurs directions de sorte à résister à des forces extérieures appliquées à la structure externe 110 dans différentes directions. Ainsi, la configuration géométrique initiale de la structure externe 110 peut être conservée dans les situations de vol habituelles.

La **Fig. 3** illustre schématiquement une vue en coupe, selon un premier plan de coupe, d'une partie du châssis de drone comportant le premier arceau 111 vertical et l'ensemble de câbles 120 agencé selon un premier mode de réalisation. Le premier plan de coupe est situé dans le plan médian du châssis de drone 100 et suivant un plan vertical lorsque le drone 100 est dans une position de vol stabilisée. L'ensemble de câbles 120 comporte huit câbles 120 reliant chacun le support 130 situé au centre du premier arceau 111 à un point d'attache 116 du premier arceau 111. Les points d'attache 116 sont régulièrement répartis sur le premier arceau 111 de sorte que leur barycentre se situe au centre du premier arceau 111. Les câbles 120 sont regroupés en paires. Les câbles 120 de chaque paire sont alignés et orientés dans une même direction et relient chacun le support 130 à un point d'attache 116. Chaque paire de câbles 120 relie ainsi deux points d'attache 116 opposés sur le premier arceau 111. Dans un mode de réalisation alternatif non représenté, l'ensemble de câbles 120 peut comporter un nombre impair de câbles 120, chaque câble reliant un point d'attache 116 du premier arceau 111 au support 130.

Les points d'attache 116 de l'ensemble de câbles sont régulièrement répartis sur le premier arceau 111 de sorte que leur barycentre se situe au centre du premier arceau 111. Ainsi, la répartition dans l'espace des différentes orientations des câbles 120 permet de s'opposer de manière équivalente à des forces extérieures appliquées avec différentes directions. L'ensemble de câbles 120 peut, selon d'autres modes de réalisation, avoir une forme de réseau, de filet ou de treillis.

En cas d'impact latéral sur le châssis, une force extérieure appliquée par un obstacle sur un côté du premier arceau 111 génère une contrainte de traction supplémentaire sur les câbles 120 élastiques fixés sous contrainte. Lesdits câbles 120 élastiques fixés sous contrainte s'opposent alors à la déformation en flexion de la structure externe 110. Si, pour chaque câble 120 élastique fixé sous contrainte de l'ensemble de câbles 120, la contrainte de traction supplémentaire est inférieure au seuil minimal de déformation en traction du câble 120, le support 130 est maintenu dans une position stable par rapport à la structure externe 110 et la structure externe 110 conserve sa configuration géométrique initiale.

Si, pour au moins un câble 120 de l'ensemble de câbles 120, la contrainte de traction supplémentaire est supérieure au seuil minimal de déformation en traction du câble 120, le au moins un câble 120 est étiré élastiquement. La stabilité du support 130 et la configuration géométrique initiale de la structure externe 110 ne sont pas conservées. En revanche, une partie de l'énergie cinétique transmise au châssis est convertie en énergie élastique. La force d'impact subie par le châssis est réduite au niveau du support 130 par effet ressort en raison de l'élasticité dudit câble 120. Il est possible d'ajuster la raideur des câbles 120 afin de limiter la déformation du support 130 en cas d'impact.

Si, pour au moins un câble 120 de l'ensemble de câbles 120, la contrainte de traction supplémentaire est supérieure au seuil minimal de déformation en traction et à la limite d'élasticité du câble 120, le au moins un câble 120 subit en outre une déformation plastique. Une partie de l'énergie cinétique transmise au châssis est ainsi absorbée par plastification du au moins un câble 120 et n'est alors pas transmise au support 130. Ledit support 130 est ainsi protégé des impacts. Dans un tel cas, le au moins un câble 120 est endommagé et doit être remplacé pour une nouvelle utilisation du drone 100.

L'ensemble de câbles 120 peut être dimensionné pour diminuer la limite d'élasticité des câbles 120 élastiques, par exemple par diminution de la section des câbles 120 élastiques, afin de réduire un intervalle entre le seuil minimal de déformation en traction des câbles 120 élastiques fixés sous contrainte et la limite d'élasticité des câbles 120 élastiques. Ainsi, lorsqu'une force extérieure appliquée présente une amplitude trop élevée pour que le support 130 soit maintenu dans sa configuration géométrique initiale grâce à la contrainte de traction initiale des câbles 120, le cas où l'énergie cinétique transmise au châssis est partiellement absorbée par plastification est favorisé.

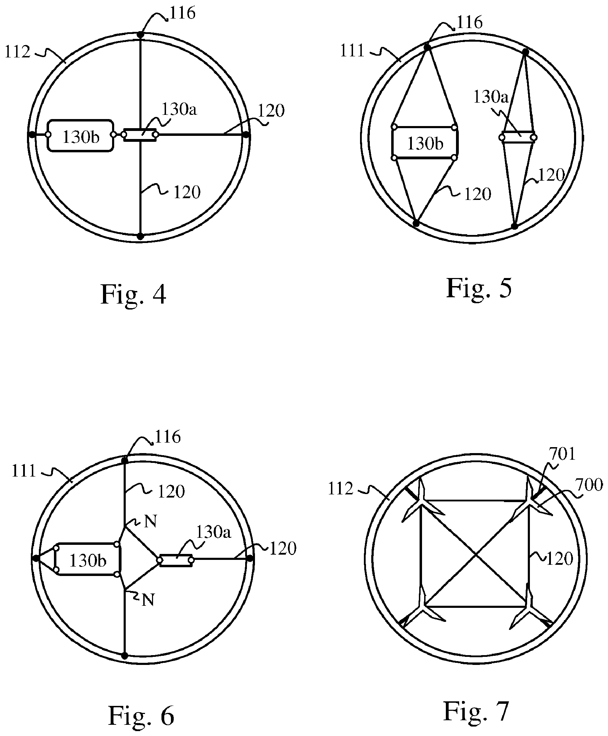

La **Fig. 4** illustre schématiquement une vue en coupe, selon un deuxième plan de coupe, d'une partie du châssis de drone comportant le deuxième arceau 112 de la structure externe 110 et l'ensemble de câbles 120 agencé selon un deuxième mode de réalisation. Le deuxième plan de coupe est situé dans le plan médian du châssis de drone 100 et suivant un plan horizontal lorsque le drone 100 est dans une position de vol stabilisée.

L'ensemble de câbles 120 comporte un premier câble reliant deux points d'attache 116 opposés sur le deuxième arceau 112, formant ainsi un diamètre du deuxième arceau 112. L'ensemble de câbles 120 comporte en outre un sous-ensemble de câbles 120 alignés entre eux, dans une direction perpendiculaire à la direction du premier câble. Un câble 120 du sous-ensemble de câbles 120 relie un premier point d'attache 116 du deuxième arceau 112 à un premier support 130a, un câble 120 du sous-ensemble de câbles 120 relie le premier support 130a à un deuxième support 130b, et un câble du sous-ensemble de câbles relie le deuxième support 130b à un deuxième point d'attache 116 opposé au premier point d'attache 116.

Ledit sous-ensemble de câbles 120 peut ainsi relier dans un même alignement deux éléments fonctionnels distincts tels que la carte de vol et la batterie. Les câbles 120 du sous-ensemble de câbles peuvent être dimensionnés pour ajuster la position des éléments fonctionnels supportés par les supports 130a et 130b en fonction de leurs masses respectives. Ainsi, il est par exemple possible de positionner au centre du deuxième arceau 112 le centre de gravité de l'ensemble des éléments fonctionnels de sorte à équilibrer le drone 100.

La **Fig. 5** illustre schématiquement une vue en coupe, selon le premier plan de coupe, d'une partie du châssis de drone comportant le premier arceau 111 vertical de la structure externe 110 et l'ensemble de câbles 120 agencé selon un troisième mode de réalisation. L'ensemble de câbles 120 comporte deux sous-ensembles de câbles 120. Chaque support 130a (respectivement 130b) est relié au premier arceau 111 par un sous-ensemble de câbles 120 indépendamment d'un autre support 130b (respectivement 130b).

Chaque support 130a, 130b est relié à deux points d'attache 116, un premier point d'attache 116, dit point d'attache 116 supérieur, étant situé au-dessus et à la verticale d'un deuxième point d'attache 116, dit point d'attache 116 inférieur. Ainsi, le support 130a, 130b est maintenu entre un point d'attache 116 supérieur, situé au-dessus, et un point d'attache 116 inférieur, situé au-dessous.

Chaque support 130a, 130b est en outre relié à chacun de ses points d'attache 116 par une paire de câbles 120. Un premier câble 120 de chaque paire de câbles 120 relie un premier point du support 130a, 130b à un point d'attache 116, et un deuxième câble 120 de ladite paire de câbles 120 relie un deuxième point du support 130a, 130b au même point d'attache 116. Ainsi, ledit point d'attache 116 et les premier et deuxième points du support 130a, 130b forment un triangle.

Dans l'exemple d'un premier support 130a de faible épaisseur, la paire de câbles 120 supérieure est reliée à un premier et deuxième points du deuxième support 130b qui sont identiques aux premier et deuxième points du deuxième support 130b auxquels est reliée la paire de câbles inférieure. Dans l'exemple d'un deuxième support 130b d'épaisseur plus élevée, la paire de câbles 120 supérieure est reliée à un premier et deuxième points du deuxième support 130b qui sont différents des premier et deuxième points du deuxième support 130b auxquels est reliée la paire de câbles inférieure.

Les deux points d'attache 116 auxquels est relié le premier support 130a sont distincts des deux points d'attache 116 auxquels est relié le deuxième support 130b. Ainsi, les deux supports 130a, 130b sont situés à des positions distinctes et n'entrent pas en contact.

En cas d'un impact latéral sur le châssis, et si la contrainte de traction supplémentaire appliquée aux câbles 120 élastiques fixés sous contrainte est supérieure au seuil minimal de déformation en traction des câbles 120, les câbles 120 sont étirés élastiquement. Le support 130a, 130b est alors entraîné selon un mouvement latéral dans un sens opposé à celui de la force appliquée par effet d'inertie par rapport à la structure externe 110 puis revient à une position initiale par effet ressort. L'impact est ainsi amorti au niveau du support 130a, 130b en raison de l'élasticité des câbles 120. Si la contrainte de traction supplémentaire est supérieure à la limite d'élasticité des câbles 120, les câbles 120 subissent en outre une déformation plastique permettant d'absorber au moins partiellement l'énergie cinétique transmise au châssis et d'amortir l'impact au niveau du support 130a, 130b.

En cas d'un impact vertical sur le châssis, par exemple lors d'une chute du drone 100 sur le sol, les câbles 120 étant situés entre deux points d'attache 116 de même direction que celle d'une force appliquée sur le châssis de drone 100, il n'y a pas de sollicitation en traction de l'ensemble des câbles 120. Lesdits câbles 120 se détendent et ne s'opposent pas à la déformation en flexion de la structure externe 110. Lorsque la structure externe 110 entre en contact avec le sol, le support 130a, 130b est entraîné en raison de son inertie dans un mouvement vertical descendant par rapport à la structure externe 110. Un tel mouvement vertical descendant du support 130a, 130b génère une sur-tension des câbles 120 supérieurs attachés au point d'attache 116 supérieur et une détente des câbles 120 inférieurs attachés au point d'attache 116 inférieur. Une partie au moins de l'énergie cinétique transmise au châssis est convertie en énergie élastique stockée dans les câbles 120 restés en tension, autrement dit dans les câbles 120 supérieurs, ce qui permet de réduire les efforts d'inertie au niveau du support 130a, 130b. Si la force d'impact est telle que la sur-tension des câbles 120 supérieurs est supérieure à la limite d'élasticité en traction des câbles 120, une partie au moins de l'énergie cinétique transmise au châssis est en outre absorbée plastiquement par les câbles 120. L'impact est amorti au niveau du support 130a, 130b mais les câbles 120 doivent être remplacés pour une nouvelle utilisation du drone 100.

La **Fig. 6** illustre schématiquement une vue en coupe, selon le premier plan de coupe, d'une partie du châssis de drone comportant le premier arceau 111 de la structure externe 110 et l'ensemble de câbles 120 agencé selon un quatrième mode de réalisation.

L'ensemble de câbles 120 relie deux supports 130a et 130b. Un premier câble 120 relie un premier point d'attache 116 du premier arceau 111 au premier support 130a. Une paire de deux câbles relie un deuxième point d'attache 116, opposé au premier point d'attache 116 sur le premier arceau 111, à deux points du deuxième support 130b. Les deux supports 130a et 130b sont en outre reliés entre eux et à un troisième et un quatrième point d'attache 116 par deux groupes de trois câbles 120, dits groupes en étoile. Pour chaque groupe en étoile, les trois câbles 120 sont reliés entre eux par un noeud N. Un premier câble 120 du groupe en étoile relie le noeud N à un point du premier support 130a. Un deuxième câble 120 du groupe en étoile relie le noeud N à un point du deuxième support 130b. Un troisième câble 120 du groupe en étoile relie le noeud N à un point d'attache 116. Les groupes en étoile permettent de réduire la longueur totale des câbles 120 reliant les supports 130a, 130b à un arceau 111. Les troisième et quatrième points d'attache 116 forment un alignement perpendiculaire à un alignement formé par les premier et deuxième points d'attache 116. En outre, les troisième et quatrième points d'attache 116 sont situés dans un alignement vertical lorsque le drone 100 est dans une position stable.

Afin d'appliquer une contrainte de traction initiale aux câbles 120 configurés selon le quatrième mode de réalisation, il suffit d'étirer vers le premier point d'attache 116 le premier câble 120 relié au premier support 130a. Une tension exercée sur le premier câble 120 se transfère à la totalité de l'ensemble de câbles 120.

Les câbles 120 situés entre les troisième et quatrième points d'attache 116 ont tendance à s'opposer à la déformation en flexion de la structure externe 110 lors d'un impact latéral sur le drone 100.

Les câbles 120 situés entre les premier et deuxième points d'attache 116 ont tendance à s'opposer à la déformation en flexion de la structure externe 100 lors d'un impact vertical sur le drone.

La **Fig. 7** illustre schématiquement en vue de dessus une partie du châssis de drone comportant le deuxième arceau 112 et un ensemble de câbles 120 reliant quatre ensembles moteur 700, chaque ensemble moteur comportant un moteur et une hélice. Un ensemble moteur 700 est disposé à l'intérieur de la structure externe 110. La structure externe 110 protège ainsi les ensembles moteur 700 et hélice d'un endommagement lors d'un impact extérieur. En outre, la structure externe 110 permet d'éviter qu'une hélice accroche un obstacle extérieur pendant un vol et permet de protéger l'environnement du drone 100. Chaque ensemble moteur 700 est supporté par la structure externe 110 à l'aide d'une ou plusieurs tiges rigides 701 et est en outre relié à chacun des autres ensembles moteur 700 par un ensemble de câbles 120. L'ensemble de câbles 120 comporte ainsi six câbles 120 reliant chacun deux ensembles moteur 700. Selon un mode de réalisation, les ensembles moteur 700 sont agencés en carré dans un même plan et les câbles 120 forment les côtés et les diagonales du carré.

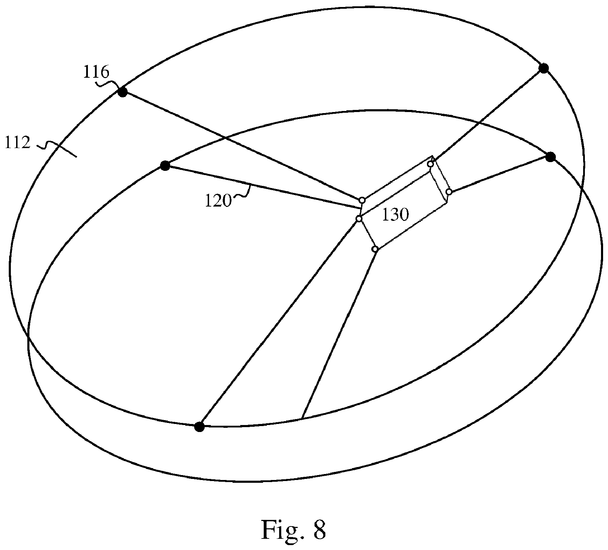

La **Fig. 8** illustre schématiquement en perspective une partie du châssis de drone comportant le deuxième arceau 112 horizontal, avec un ensemble de câbles 120 permettant de maintenir un support 130 selon un cinquième mode de réalisation. Le support 130 est relié à six points d'attache 116 du deuxième arceau 112 par six câbles 120 distincts. Trois câbles 120 supérieurs sont rattachés à trois premiers points d'attache 116 situés en partie haute du deuxième arceau 112 et répartis sur la circonférence de l'arceau 112. Trois câbles 120 inférieurs sont rattachés à trois seconds points d'attache 116 situés sur le deuxième arceau 112 au-dessous respectivement des trois premiers points d'attache 116.

En cas d'un impact du châssis sur le sol, par exemple lors d'une chute du drone 100, le support 130 est entraîné vers le bas en raison de son inertie. Le mouvement vertical descendant du support 130 génère une sur-tension des câbles 120 supérieurs et une détente des câbles 120 inférieurs. Une partie de l'énergie cinétique transmise au châssis est donc reprise ou stockée élastiquement par les câbles 120 supérieurs ce qui permet de protéger le support 130 en réduisant la force d'impact.

## Revendications

1. Châssis de drone comportant une structure externe (110) qui se déforme élastiquement en flexion, et comportant en outre un ensemble de câbles (120) reliant au moins un support (130), destiné à supporter un élément fonctionnel du drone, à la structure externe (110), l'ensemble de câbles (120) comportant des câbles (120) élastiques qui se déforment élastiquement en traction sous une contrainte de traction supérieure à un seuil, dit seuil naturel de déformation en traction, l'ensemble de câbles (120) étant fixé à plusieurs points de la structure externe (110), dits points d'attache (116), pour maintenir le au moins un support (130) dans une position stable par rapport à la structure externe (110), en ce que les câbles (120) élastiques sont fixés sous contrainte par application, auxdits câbles (120) élastiques, d'une contrainte de traction initiale, et par maintien de la contrainte de traction initiale par fixation à la structure externe (110) de sorte qu'une force extérieure appliquée au châssis et générant une contrainte de traction supplémentaire sur les câbles (120) élastiques fixés sous contrainte, entraîne une déformation en traction des câbles (120) et une déformation en flexion de la structure externe (110) seulement si ladite contrainte de traction supplémentaire dépasse un seuil minimal de déformation en traction qui est supérieur au seuil naturel de déformation en traction des câbles (120) élastiques.

2. Châssis de drone selon la revendication 1, dans lequel l'ensemble de câbles (120) comporte des câbles (120) élastiques en polyéthylène haute densité.

3. Châssis de drone selon l'une des revendications 1 ou 2, dans lequel une section de chaque câble (120) élastique de l'ensemble de câbles (120) est déterminée pour réduire une limite d'élasticité des câbles (120) élastiques et favoriser une déformation plastique desdits câbles (120) lorsqu'une contrainte de traction supplémentaire appliquée aux câbles (120) élastiques fixés sous contrainte, et générée par la force extérieure appliquée au châssis, est supérieure au seuil minimal de déformation en traction desdits câbles (120) élastiques fixés sous contrainte.

4. Châssis de drone selon l'une quelconque des revendications 1 à 3, dans lequel la structure externe comporte deux arceaux (111, 112), un premier arceau (111) étant situé dans un plan orthogonal à un deuxième arceau (112), le premier arceau (111) étant dans un plan vertical et le deuxième arceau (112) étant dans un plan horizontal lorsque le drone (100) est dans une position de vol stabilisée, et dans lequel les points d'attache (116) auxquels est fixé le au moins un support (130) sont situés sur un même arceau (111, 112).

5. Châssis de drone selon l'une quelconque des revendications 1 à 4, dans lequel l'ensemble de câbles (120) comporte des câbles (120) orientés dans plusieurs directions.

6. Châssis de drone selon l'une quelconque des revendications 1 à 5, dans lequel un support (130) comporte une carte de vol, et dans lequel chaque câble de l'ensemble de câbles (120) a une longueur déterminée pour maintenir le support (130) comportant la carte de vol au centre de la structure externe (110).

7. Châssis de drone selon l'une quelconque des revendications 1 à 5, dans lequel chaque câble (120) de l'ensemble de câbles (120) a une longueur déterminée pour centrer, par rapport à la structure externe (110), un centre de gravité d'un ensemble des éléments fonctionnels supportés par le au moins un support (130).

8. Châssis de drone selon l'une quelconque des revendications 1 à 7, dans lequel l'ensemble de câbles (120) relie plusieurs supports (130a, 130b) à la structure externe (110), chaque support (130a) étant relié à la structure externe (110) par un sous-ensemble de l'ensemble de câbles (120) indépendamment d'un autre support (130b).

9. Châssis de drone selon l'une quelconque des revendications 1 à 8, dans lequel l'ensemble de câbles (120) comporte un sous-ensemble de câbles (120) reliant le au moins un support (130) à deux points d'attache (116) de la structure externe (110), le sous-ensemble de câbles (120) comportant deux paires de câbles (120), chaque paire de câbles (120) reliant un des deux points d'attache (116) au support (130), et le sous-ensemble de câbles (120) étant agencé de sorte que, pour chaque paire de câbles (120), un premier câble (120) de la paire de câbles relie un point d'attache (116) à un premier point du support (130) et un deuxième câble (120) de ladite paire de câbles relie le même point d'attache (116) à un deuxième point du support (130) différent du premier point du support (130).

10. Châssis de drone selon l'une quelconque des revendications 1 à 7, dans lequel l'ensemble de câbles (120) comporte un sous-ensemble de câbles (120) qui relie, entre deux points d'attache (116), plusieurs supports (130a, 130b) alignés entre eux et alignés avec lesdits deux points d'attache (116).

11. Châssis de drone selon l'une quelconque des revendications 4 à 7, dans lequel l'ensemble de câbles (120) relie le au moins un support (130) à six points d'attache (116) du deuxième arceau (112) par six câbles (120) distincts, les six câbles (120) distincts comportant trois câbles (120) supérieurs reliant le support (130) à respectivement trois premiers points d'attache (116), les premiers points d'attache étant situés en partie haute du deuxième arceau (112) et répartis sur la circonférence de l'arceau, et trois câbles (120) inférieurs reliant le support (130) à respectivement trois seconds points d'attache (116), chaque second point d'attache (116) étant situé sur le deuxième arceau (112) au-dessous d'un premier point d'attache (116).

12. Châssis de drone selon l'une quelconque des revendications 1 à 10, dans lequel le châssis supporte au moins quatre ensembles moteur (700) comportant chacun un moteur et une hélice, chaque ensemble moteur (700) étant fixé à la structure externe (110) par une tige rigide (701), et dans lequel l'ensemble de câbles (120) comporte un câble (120) reliant chaque ensemble moteur (700) à chaque autre ensemble moteur (700).

13. Châssis de drone selon l'une quelconque des revendications précédentes, dans lequel des fils électriques sont passés à l'intérieur de câbles (120) de l'ensemble de câbles (120) pour relier électriquement entre eux des éléments fonctionnels.

14. Drone (100) comportant un châssis de drone selon l'une quelconque des revendications 1 à 13.

## Patentansprüche

1. Drohnenrahmen mit einer äußeren Struktur (110), die sich biegeelastisch verformt, und ferner mit einer Anordnung von Kabeln (120), die mindestens einen Träger (130) zum Tragen eines Funktionselements der Drohne mit der äußeren Struktur (110) verbindet,
wobei die Anordnung von Kabeln (120) elastische Kabel (120) umfasst, die sich unter einer Zugspannung, die über einem als natürlicher Schwellenwert der Zugverformung bezeichneten Schwellenwert liegt, auf Zug elastisch verformen,
wobei die Anordnung von Kabeln (120) an mehreren als Befestigungspunkte (116) bezeichneten Punkten der äußeren Struktur (110) befestigt ist, um den mindestens einen Träger (130) in einer stabilen Position in Bezug auf die äußere Struktur (110) zu halten, wobei die elastischen Kabel (120) unter Spannung befestigt sind, indem auf die elastischen Kabel (120) eine Ausgangszugspannung ausgeübt und die Ausgangszugspannung durch Befestigung an der äußeren Struktur (110) aufrechterhalten wird, sodass eine von außen auf den Rahmen ausgeübte Kraft, die eine zusätzliche Zugspannung auf die unter Spannung stehenden elastischen Kabel (120) ausübt, nur dann zu einer Zugverformung der Kabel (120) und einer Biegeverformung der äußeren Struktur (110) führt, wenn die zusätzliche Zugspannung einen Mindestschwellenwert der Zugverformung, der über dem natürlichen Schwellenwert der Zugverformung der elastischen Kabel (120) liegt, überschreitet.

2. Drohnenrahmen nach Anspruch 1, wobei die Anordnung von Kabeln (120) elastische Kabel (120) aus Polyethylen mit hoher Dichte umfasst.

3. Drohnenrahmen nach einem der Ansprüche 1 oder 2, wobei ein Querschnitt jedes elastischen Kabels (120) der Anordnung von Kabeln (120) so bestimmt ist, dass er eine Elastizitätsgrenze der elastischen Kabel (120) reduziert und eine plastische Verformung der Kabel (120) begünstigt, wenn eine auf die unter Spannung befestigten elastischen Kabel (120) ausgeübte zusätzliche Zugspannung, die durch die auf den Rahmen ausgeübte äußere Kraft erzeugt wird, größer als der Mindestschwellenwert der Zugverformung der unter Spannung befestigten elastischen Kabel (120) ist.

4. Drohnenrahmen nach einem der Ansprüche 1 bis 3, wobei die äußere Struktur zwei Bügel (111, 112) umfasst, wobei sich ein erster Bügel (111) in einer Ebene befindet, die senkrecht zu einem zweiten Bügel (112) verläuft, wobei der erste Bügel (111) in einer vertikale Ebene liegt und der zweite Bügel (112) in einer horizontalen Ebene liegt, wenn sich die Drohne (100) in einer stabilisierten Flugposition befindet, und wobei sich die Befestigungspunkte (116), an denen der mindestens eine Träger (130) befestigt ist, an ein und demselben Bügel (111, 112) befinden.

5. Drohnenrahmen nach einem der Ansprüche 1 bis 4, wobei die Anordnung von Kabeln (120) Kabel (120) umfasst, die in mehrere Richtungen ausgerichtet sind.

6. Drohnenrahmen nach einem der Ansprüche 1 bis 5, wobei ein Träger (130) eine Flugkarte umfasst und wobei jedes Kabel der Anordnung von Kabeln (120) eine bestimmte Länge umfasst, um den Träger (130) mit der Flugkarte in der Mitte der äußeren Struktur (110) zu halten.

7. Drohnenrahmen nach einem der Ansprüche 1 bis 5, wobei jedes Kabel (120) der Anordnung von Kabeln (120) eine bestimmte Länge umfasst, um einen Schwerpunkt einer Anordnung von Funktionselementen, die von dem mindestens einen Träger (130) getragen werden, in Bezug auf die äußere Struktur (110) zu zentrieren.

8. Drohnenrahmen nach einem der Ansprüche 1 bis 7, wobei die Anordnung von Kabeln (120) mehrere Träger (130a, 130b) mit der äußeren Struktur (110) verbindet, wobei jeder Träger (130a) unabhängig von einem anderen Träger (130b) durch eine Unteranordnung der Anordnung von Kabeln (120) mit der äußeren Struktur (110) verbunden ist.

9. Drohnenrahmen nach einem der Ansprüche 1 bis 8, wobei die Anordnung von Kabeln (120) eine Unteranordnung von Kabeln (120) umfasst, die den mindestens einen Träger (130) mit zwei Befestigungspunkten (116) der äußeren Struktur (110) verbindet, wobei die Unteranordnung von Kabeln (120) zwei Paare von Kabeln (120) umfasst, wobei jedes Paar von Kabeln (120) einen der beiden Befestigungspunkte (116) mit dem Träger (130) verbindet und wobei die Unteranordnung von Kabeln (120) so angeordnet ist, dass für jedes Paar von Kabeln (120) ein erstes Kabel (120) des Paars von Kabeln einen Befestigungspunkt (116) mit einem ersten Punkt des Trägers (130) verbindet und ein zweites Kabel (120) des Paars von Kabeln denselben Befestigungspunkt (116) mit einem vom ersten Punkt des Trägers (130) verschiedenen zweiten Punkt des Trägers (130) verbindet.

10. Drohnenrahmen nach einem der Ansprüche 1 bis 7, wobei die Anordnung von Kabeln (120) eine Unteranordnung von Kabeln (120) aufweist, die zwischen zwei Befestigungspunkten (116) mehrere miteinander ausgerichtete und mit den beiden Befestigungspunkten (116) ausgerichtete Träger (130a, 130b) verbindet.

11. Drohnenrahmen nach einem der Ansprüche 4 bis 7, wobei die Anordnung von Kabeln (120) den mindestens einen Träger (130) durch sechs separate Kabel (120) mit sechs Befestigungspunkten (116) des zweiten Bügels (112) verbindet, wobei die sechs separaten Kabel (120) Folgendes umfassen: drei obere Kabel (120), die den Träger (130) mit jeweils drei ersten Befestigungspunkten (116) verbinden, wobei die ersten Befestigungspunkte sich im oberen Teil des zweiten Bügels (112) befinden und über den Umfang des Bügels verteilt sind, und drei untere Kabel (120), die den Träger (130) mit jeweils drei zweiten Befestigungspunkten (116) verbinden, wobei sich jeder zweite Befestigungspunkt (116) am zweiten Bügel (112) unterhalb eines ersten Befestigungspunkts (116) befindet.

12. Drohnenrahmen nach einem der Ansprüche 1 bis 10, wobei der Rahmen mindestens vier Motoranordnungen (700) trägt, die jeweils einen Motor und einen Propeller umfassen, wobei jede Motoranordnung (700) durch eine starre Stange (701) an der äußeren Struktur (110) befestigt ist und wobei die Anordnung von Kabeln (120) ein Kabel (120) umfasst, das jede Motoranordnung (700) mit jeder anderen Motoranordnung (700) verbindet.

13. Drohnenrahmen nach einem der vorangehenden Ansprüche, wobei innerhalb von Kabeln (120) der Anordnung von Kabeln (120) elektrische Leitungen geführt sind, um Funktionselemente elektrisch miteinander zu verbinden.

14. Drohne (100), umfassend einen Drohnenrahmen nach einem der Ansprüche 1 bis 13.

## Claims

1. Drone chassis, comprising an external structure (110) that deforms elastically in bending, furthermore comprising a set of cables (120) connecting at least one support (130), intended to support a functional element of the drone, to the external structure (110), the set of cables (120) comprising elastic cables (120) that deform elastically in traction under a tensile stress above a threshold, referred to as the natural tensile deformation threshold, the set of cables (120) being attached at several points on the external structure (110), referred to as attachment points (116), to hold the at least one support (130) in a stable position with respect to the external structure (110), in that the elastic cables (120) are attached under stress by applying, to said elastic cables (120), an initial tensile stress, and by maintaining the initial tensile stress by attaching to the external structure (110) so that an external force applied to the chassis and generating an additional tensile stress on the elastic cables (120) attached under stress causes a deformation under traction of the cables (120) and a bending deformation of the external structure (110) only if said additional tensile stress exceeds a minimum tensile deformation threshold that is above the natural tensile deformation threshold of the elastic cables (120).

2. Drone chassis according to claim 1, wherein the set of cables (120) comprises elastic cables (120) made from high-density polyethylene.

3. Drone chassis according to one of claims 1 or 2, wherein a cross section of each elastic cable (120) in the set of cables (120) is determined for reducing an elastic limit of the elastic cables (120) and favouring plastic deformation of said cables (120) when an additional tensile stress applied to the elastic cables (120) attached under stress, and generated by the external force applied to the chassis, is above the minimum tensile deformation threshold of said elastic cables (120) attached under stress.

4. Drone chassis according to any one of claims 1 to 3, wherein the external structure comprises two arches (111, 112), a first arch (111) being located in a plane orthogonal to a second arch (112), the first arch (111) being in a vertical plane and the second arch (112) being in a horizontal plane when the drone (100) is in a stabilised flight position, and wherein the attachment points (116) to which the at least one support (130) is attached are located on one and the same arch (111, 112).

5. Drone chassis according to any one of claims 1 to 4, wherein the set of cables (120) comprises cables (120) oriented in several directions.

6. Drone chassis according to any one of claims 1 to 5, wherein a support (130) comprises a flight map, and wherein each cable in the set of cables (120) has a given length for holding the support (130) comprising the flight map at the centre of the external structure (110).

7. Drone chassis according to any one of claims 1 to 5, wherein each cable (120) in the set of cables (120) has a given length for centring, with respect to the external structure (110), a centre of gravity of a set of the functional elements supported by the at least one support (130).

8. Drone chassis according to any one of claims 1 to 7, wherein the set of cables (120) connects a plurality of supports (130a, 130b) to the external structure (110), each support (130a) being connected to the external structure (110) by a subset of the set of cables (120) independently of another support (130b).

9. Drone chassis according to any one of claims 1 to 8, wherein the set of cables (120) comprises a subset of cables (120) connecting the at least one support (130) to two attachment points (116) of the external structure (110), the subset of cables (120) comprising two pairs of cables (120), each pair of cables (120) connecting one of the two attachment points (116) to the support (130), and the subset of cables (120) being arranged so that, for each pair of cables (120), a first cable (120) in the pair of cables connects an attachment point (116) to a first point of the support (130) and a second cable (120) in said pair of cables connects the same attachment point (116) to a second point of the support (130) different from the first point of the support (130).

10. Drone chassis according to any one of claims 1 to 7, wherein the set of cables (120) comprises a subset of cables (120) that connects, between two attachment points (116), several supports (130a, 130b) aligned with each other and aligned with said two attachment points (116)

11. Drone chassis according to any one of claims 4 to 7, wherein the set of cables (120) connects the at least one support (130) to six attachment points (116) of the second arch (112) by six distinct cables (120), the six distinct cables (120) comprising three upper cables (120) connecting the support (130) to respectively three first attachment points (116), the first attachment points being located at the upper part of the second arch (112) and distributed over the circumference of the arch, and three lower cables (120) connecting the support (130) to respectively three second attachment points (116), each second attachment point (116) being located on the second arch (112) below a first attachment point (116).

12. Drone chassis according to any one of claims 1 to 10, wherein the chassis supports at least four motor units (700) each comprising a motor and a propeller, each motor unit (700) being attached to the external structure (110) by a rigid rod (701), and wherein the set of cables (120) comprises a cable (120) connecting each motor unit (700) to each other motor unit (700.

13. Drone chassis according to any one of the preceding claims, wherein electric wires are passed inside cables (120) in the set of cables (120) for electrically connecting functional elements together.

14. Drone (100) comprising a drone chassis according to any one of claims 1 to 13.
